Europäisches Patentamt

European Patent Office

Office européen des brevets

(11) Publication number: 0 300 833
A1

# EUROPEAN PATENT APPLICATION

(21) Application number: 88306818.1

(22) Date of filing: 25.07.88

(51) Int. Cl.4: **G 01 L 9/14**
G 01 L 13/06

(30) Priority: 24.07.87 GB 8717528

(43) Date of publication of application:
25.01.89 Bulletin 89/04

(84) Designated Contracting States: DE FR IT

(71) Applicant: PALL EUROPE LIMITED
Europa House Havant Street
Portsmouth PO1 3PD (GB)

(72) Inventor: Easton, Neil
2 The Parchment
Havant Hampshire, PO9 5HD (GB)

Tolcher, John Albert George
146 Powers Court Road
North End Portsmouth PO2 7JP (GB)

(74) Representative: Knott, Stephen Gilbert et al
MATHISEN, MACARA & CO. The Coach House 6-8
Swakeleys Road
Ickenham Uxbridge Middlesex UB10 8BZ (GB)

(54) Differential pressure indication in fluid flow units.

(57) An assembly comprises a fluid flow unit (11) and a differential a indicator (10) incorporating a movable magnet (70), means (36,64) for subjecting the magnet to the pressures at the inlet (13) and the outlet (15) of the unit (11) such that the location of the magnet is related, at any given instant, to the differential of said pressures, and incorporating a Hall-effect device (14) responsive to the location of the magnet and capable of providing an output signal related to said location. The assembly further comprises a display unit (12) connected to receive said output signal and arranged to provide a display indicating the value of the pressure differential.

FIG.I.

EP 0 300 833 A1

**Description**

## DIFFERENTIAL PRESSURE INDICATION IN FLUID FLOW UNITS

This invention relates to differential pressure indication and in particular to fluid flow units incorporating differential pressure indicators.

It is a requirement of certain fluid flow units incorporated in a system that the differential pressure across such a unit shall be continuously monitored. For example, an increase in the pressure drop may indicate that the unit has become faulty by way of leakage or alternatively the unit may have suffered from an internal blockage with the result that the pressure downstream of the unit becomes much reduced. One such item of unit frequently encountered in various systems is a filter unit and the differential pressure across the filter is a good measure of the effectiveness of filtration at any given instant during the life of the filter element.

It is conventional practice when a filter becomes substantially totally blocked owing to accumulation of "dirt" particles that a valve is opened so that the filter is by-passed and in the case of a lubricant, the main apparatus such as an internal-combustion engine will continue to receive lubrication even if the quality is not up to standard. However, if the by-pass is allowed to remain effective for a substantial length of time, the engine or other apparatus to be lubricated is liable to substantial damage because such neglect usually indicates not only that the operator has failed to change the filter element but has also failed to change the lubricant itself which will be severely degraded.

It follows from this background that there is a requirement for an effective sensor of pressure differential which gives an indication, whether electrical, audible, visual or even mechanical which serves to indicate that either the renewable filter element is in good order, is approaching the time when it needs to be changed and when the by-pass is brought into action, or is about to be brought into action.

One possibility for meeting this requirement is to measure the pressure upstream and downstream of the filter unit or other item of equipment of which the pressure differential is to be monitored and to provide a comparator which will give an output of pressure differential. However, this approach is not particularly satisfactory as the sensing equipment required would be relatively costly and the electronic equipment required as an auxiliary for producing an output indicating pressure differential would itself be both expensive and comparatively bulky.

There are, at present, many different sensors for the measurement of pressure, some of which can produce very accurate measurements but the need for absolute pressure measurements with a high degree of accuracy does not apply when the requirement is merely a pressure differential measurement which can provide a ready indication of the conditions within an oil or other filter or indeed any other equipment where pressure differential needs to be monitored.

Possible ways of achieving this objective include the use of pressure contacts but these are bulky and in order to achieve the required degree of accuracy the movement allowed for the piston of the equipment would have to be large with corresponding large size for the unit overall. Reed switches operated by magnets can also be used in conjuction with known indicating apparatus, but the stroke would need to be larger than desirable and once again the overall size would be large enough to be inconvenient.

Piezo-resistive pressure transducers are conveniently small and very accurate but it would be necessary also to provide some form of spring-loaded piston and make use of the piezo-resistive transducers for measuring deflections of the piston. This type of equipment would be expensive to manufacture and would have no very great advantage in use as the requirement for very high accuracy of absolute pressure measurement is not present.

Summarizing, prior proposals and several readily available possible solutions all suffer from the disadvantages of excessive cost an/or bulk and the general objective of the present invention is therefore to provide a differential pressure sensor which is inexpensive to manufacture, convenient in use and sufficiently small in size to be acceptable for most purposes.

According to the present invention there is provided an assembly comprising a unit having an inlet and an outlet through which fluid flows, the unit inducing a pressure drop in said flowing fluid, and a indicator connected across said unit and comprising a moveable magnet, a first inlet connected to the inlet of said unit for subjecting the magnet to the pressure of the fluid at said unit inlet, a second inlet connected to the outlet of said unit for subjecting the magnet to the pressure of the fluid at said unit outlet, such that the position of the magnet at any given instant is related to the difference between said pressures, and a Hall-effect device responsive to the position of the magnet to produce an output signal corresponding to said pressure difference.

The invention will now be described, by way of example only, with reference to the accompanying diagrammatic drawings, in which:

Figure 1 is a longitudinal section through a cylindrical body forming a part of a differential pressure indicator connected to a fluid flow unit, shown schematically.

Figure 2 is a load/deflection curve for an assembly incorporating the indicator of Figure 1;

Figure 3 is a longitudinal section through an alternative differential pressure indicator connected to a fluid flow unit, shown schematically;

Figure 4 is a longitudinal section through a further embodiment of a differential pressure indicator connected to a fluid flow unit, shown schematically, and

Figure 5 is an external plan view of a display and control box forming a part of any of the differential pressure indicators of Figures 1,3 and 4.

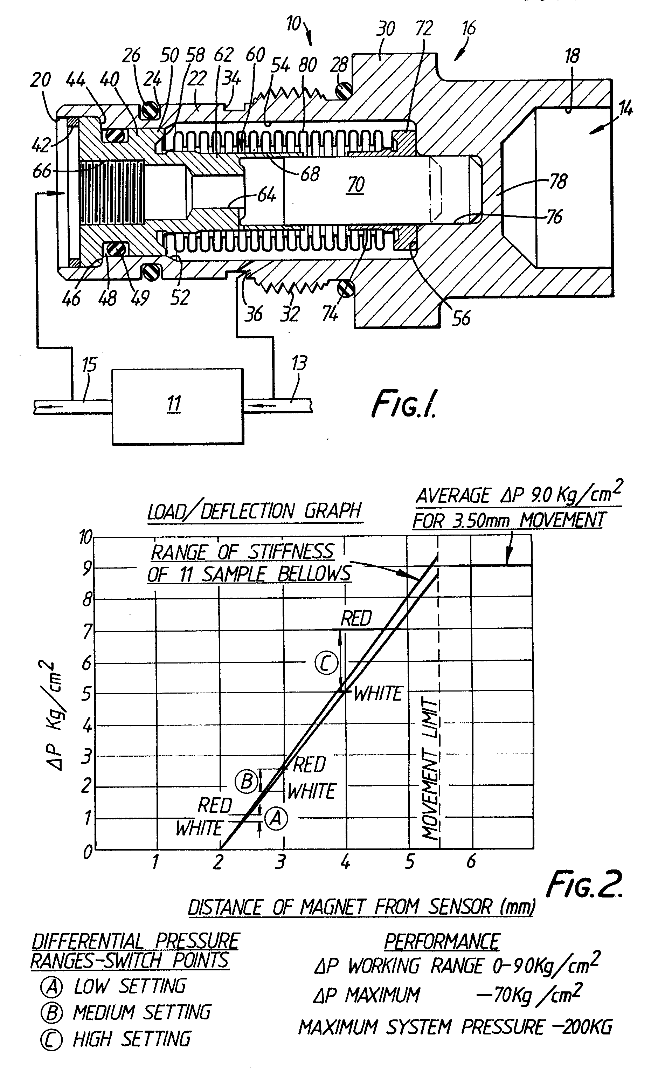

In broad terms, the system in accordance with the present invention includes a sensing head 10, one example of which is illustrated in Figure 1, and a display and control box 12 illustrated in Figure 4. The sensing head 10 has a standard external configuration and is plugged into a corresponding recess of the filter unit or other fluid flow unit ·11 to be monitored and the sensing head also accommodates a Hall-effect integrated circuit or "chip" 14 in a housing 16 forming part of the body of the head. The Hall-effect chip is a standard available component, for example as manufactured and marketed by Sprague. The chip has a reference number UGS 3503U.

The display and control box 12 shown in Figure 4 includes appropriate circuitry for receiving the signal generated by the chip and since this circuitry is conventional, no further detail is given.

The control box and display unit incorporates conventional circuits including a calibration facility and does not need to be further described.

Although, in the preferred embodiments herein described, the sensing head and the control box and display unit are shown as separate entities, they can, of course, be combined when use conditions dictate such a modification.

In a futher variant, the assembly is self-powered, e.g. by means of a battery and no external signal generated. In this variant it is also possible to use an external power source.

Turning now to Figure 1 for more detailed consideration, the sensing head 10 includes a body of cast aluminium, injection moulded plastics material or other non-magnetic material. Two internal recesses 18,20 are provided, one being for the reception of the two pressures which provide the differential pressure reading, and the other, totally separate recess for receiving the Hall-effect chip 14 referred to above.

The sensing portion recess 20 lies within a comparatively smaller diameter external portion 22 of the generally cylindrical body 16, having an annular groove 24 which receives a standard O-ring 26 lying adjacent one end of the portion 22, and another O-ring 28 lies in an annular recess defined by the portion 22 and a larger diameter portion 30 lying externally of an end portion of the recess remote for the first O-ring 26. Externally adjacent to the second O-ring 28 a screw thread 32 enables the sensing head to be accurately and tightly engaged in a corresponding recess (not shown) in a filter or other unit 11, such recess being provided as standard in many filter units.

Intermediate the two O-rings there is a further annular recess 34 which communicates with the higher pressure, that is the pressure at the inlet 13 of the unit 11 to be monitored. This pressure is communicated to the inside of the recess 20 through one or more obliquely arranged bores 36.

Internally, the bore 20 extending axially of the sensing head receives a hollow generally cylindrical member 40 retained in position by a spring washer 42 which engages, in part, in an annular internal recess of the bore 20 and also engages one end face (left-hand, as shown) of the cylindrical member 40.

The latter has a step 44 which engages against a corresponding step 46 of the internal bore 20 and this step continues radially inwardly to form an annular recess 48 which receives an annular seal 49 acting against the internal face of the bore 20 and to the right, as shown, of the recess a land 50 has an external diameter corresponding precisely to the internal diameter of the bore.

To the right of the land, the internal bore 20 is slightly enlarged at a chamfer 52 and the enlarged portion 54 of the bore extends to the right where it terminates at a face 56 within the enlarged portion 30 of the sensing head 10.

The hollow cylindrical member 40 has a step 58 coincident with the left-hand end of the enlarged portion 54 of the bore and the hollow cylindrical member extends with a reduced diameter in comparison with that at the land 50 to a location approximately one half of the distance along the enlarged portion 54 of the internal bore.

A part 62 of this extension 60 has a substantial thickness and has an internal bore 64 of relatively small diameter communicating with a stepped bore 66 leading to the left-hand end of the sensing head where communication is made with the lower of the two pressures, that is to say the outlet 15 of the unit 11. The remainder 68 of the extension of the cylindrical member 40 is of small radial thickness and receives a magnetic piston 70 of cylindrical shape and having a length corresponding to the designed stroke required. The magnetic field of the piston is aligned with the longitudinal axis of the piston in this embodiment. The part 68 of the extension 60 thus acts as a piston guide and further guidance is provided by a bush 72 the right hand end face of which abuts the step 56 at the right hand end of the enlarged diameter portion 54 of the internal bore of the cylindrical member. The bush has a relatively thin portion 74 extending towards the thin part 68 of the cylindrical member and provides a further sliding support for the magnetic piston 70. The right-hand portion of the magnetic piston 70 is engaged in a bore 76 of corresponding internal diameter which bore extends to within a short distance from the right hand recess 18 which receives the Hall-effect chip 14. A partition 78 provides a division between the two recesses 18 and 20.

The cylindrical member 40 and the bush 72 together receive and mount a bellows 80 which has a capacity for extension which matches the maximum stroke of the magnetic piston. Preferably the bellows is of stainless steel as it may be required to withstand corrosive attack by various fluids, the pressure drop of which is to be measured across the filter unit.

The manner of operation of the embodiment hereinbefore described with reference to Figure 1 is very straightforward but will nevertheless be briefly described. The relatively lower pressure from the unit outlet 15 is applied through the bore 64 of the cylindrical member 40 to one end face of the magnetic piston 70 and the higher pressure from the unit inlet 13 is applied through the oblique passages 36 to the annular space surrounding the bellows 80 and is in turn transmitted to the opposite end face of the magnetic piston 70 by appropriate design of the clearance between the piston and the bore 76. As the change in pressure drop will be progressive when measuring across a filter, there is no need for a large clearance to enable a rapid pressure change communication.

The Hall-effect "chip" 14 produces an output signal dependent upon the precise location of the right-hand of the magnetic piston 70 and this signal activates the control box and display unit on a stepwise basis, preferably employing a colour code indicating green for safe normal operation of the filter or other equipment, yellow for approach of a blockage and a requirement for change of the replaceable filter element and red which indicates either that the by-pass has been brought into operation or is about to be employed.

If desired the chip may, alternatively, provide a continuous signal to control apparatus so that at any given time a display is provided of the actual pressure drop across the filter unit or other equipment. Although primarily intended for use with a filter unit, it must be emphasised that the differential pressure sensor assembly in accordance with the present invention can be employed to monitor pressure drop over more than one unit or indeed, if appropriately designed over the whole of a system. Normally, the requirement is that excessive pressure drop indicating blockage should be indicated but alternatively it may be desirable to monitor the occurrence of a leak either in the unit being monitored itself or indeed upstream or downstream of that unit.

Figure 2 is a load deflection graph illustrating the pressure differential which can be measured for various differential pressure ranges.

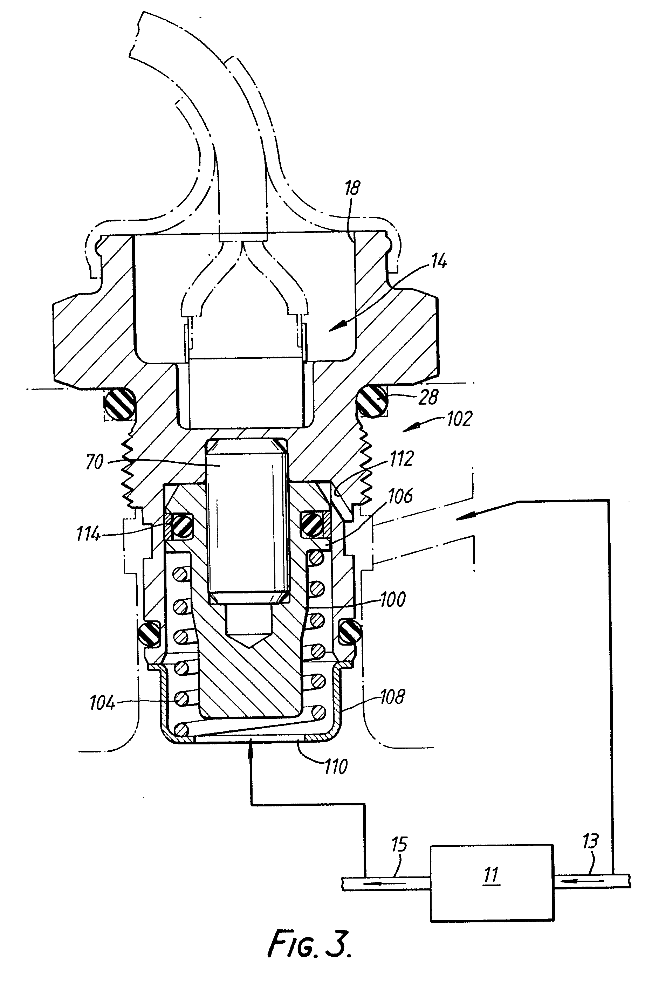

Reference will now be made to Figure 3 in which the bellows is replaced by a spring-loaded piston 100. The sensor head includes a hollow generally cylindrical body 102 broadly the same as in the embodiment of Figure 1 and will not be further described. The Hall-effect device 14 is again embedded in a recess 18 at one end of the cylindrical body but in this construction the cylindrical magnet 70 which, as in the first embodiment, has its magnet field aligned with the axis is permanently mounted in the piston 100 of non-magnet material and this is biassed by a helical spring 104 abutting a step 106 of the piston and, at the other end thereof against an end cap 108 secured to an end face the cylindrical hollow body member 102.

The cap 108 has a central opening 110 through which the lower pressure from the unit outlet 15 is communicated to one end face of the piston and the body 102 has one or more oblique bores 112 which provide communication of the higher pressure from the unit inlet 13 to the opposite end of the piston. The piston 100 is provided with a piston ring 114 sealingly engaging against the internal bore of the hollow cylindrical body.

The manner of operation of this embodiment is broadly the same as in the embodiment described with reference to Figure 1, but it does have the disadvantage that the piston seal inevitably involves some friction in contrast to the substantial elimination of friction of the magnetic piston in the first embodiment. As will be appreciated the first embodiment required no seal of a sliding kind to act between the two pressures.

Reference will now be made to Figure 4 which shows a further version of the sensing head 10 having a hollow generally cylindrical body 130 with two recesses 132,134 separated by a partition 136. The recess 132 receives the chip 14 and its connections to the display unit 12 and the recess 134 receives a magnet 138 mounted at one end on a metal diaphragm 140. The higher pressure from the unit inlet 13 is communicated to one face of the diaphragm 140 through a bore 142 and the lower pressure from the unit outlet 11 is communicated to the other face through the open end of the recess. The end portion of the body 130 carries an annular seal 144 which engages in a recess 146 of the filter unit or other unit 11, of which the pressure drop is to be monitored. A further annular seal 148 is provided which serves a similar purpose to seal 28 of the embodiment of Figure 1.

The manner of operation of this version is generally similar to that of the embodiment of Figure 1, but the use of a diaphragm limits the pressure drop range which can be monitored. Large ranges can, of course, be accommodated, but only at the inconvenience of large diameter diaphragms.

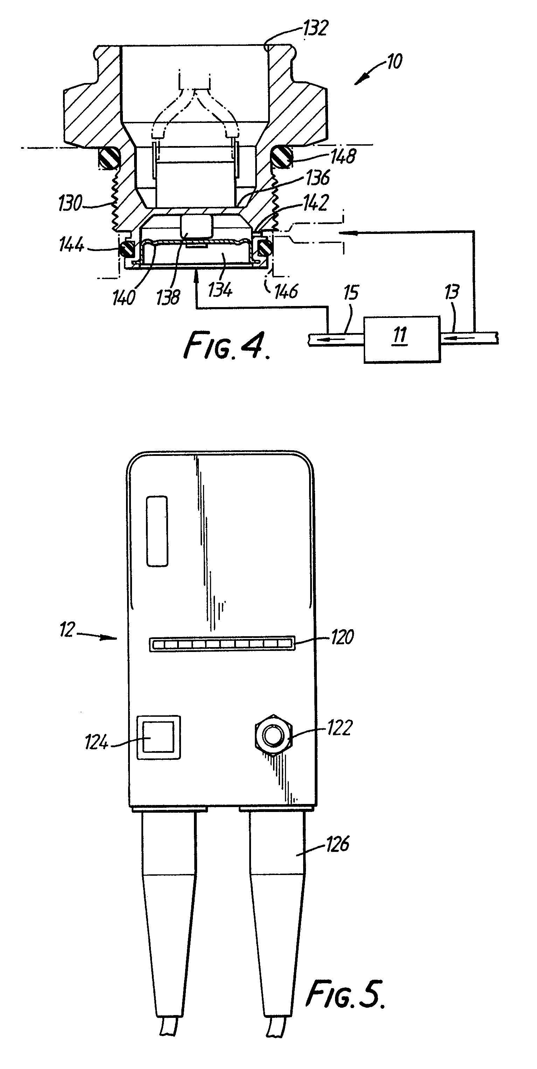

Reference will now be made to Figure 5 which illustrates externally the display and control box 12 which, as mentioned above, is generally conventional and details are not therefore necessary. A pressure drop display 120 is provided in ten steps which, as mentioned above, are colour coded for instant recognition. Provision is made at 122 for calibration of the whole assembly and a push botton on/off switch 124 is provided to enable the display to be provided. Connections 126 are, of course, provided to the Hall-effect chip device.

The assembly hereinbefore described can be used to monitor any type of fluid, gas, liquid or vapour. Obviously, if the fluid is corrosive special materials must be used which are resistant to corrosive attack. The sensitive electronics device can be fully protected from the fluid being monitored and also from the ambient atmosphere by embedding in a suitable impermeable compound.

The magnetic field generated is "aligned with the direction of motion of the magnet in the preferred embodiment and therefore it is to be expected that extraneous masses of magnetic material placed near the sensor will have a minimum effect upon the indicated readings.

## Claims

1. An assembly comprising a unit (11) having an inlet (13) and an outlet (15) through which fluid flows, the unit (11) inducing a pressure drip in said flowing fluid, and a indicator (10) connected across said unit and comprising a moveable magnet (70, Figs. 1 and 3; 138 Fig. 4), a first inlet (36, Fig. 1; 112, Fig. 3; 142, Fig. 4) connected to the inlet (13) of said unit (11) for subjecting the magnet to the pressure of the fluid at said unit inlet, a second inlet (64, Fig. 1; 110, Fig. 3; 134, Fig. 4) connected to the outlet (15) of said unit (11) for subjecting the magnet (70, Figs. 1 and 3; 138, Fig. 4) to the pressure of the fluid at said unit outlet (15), such that the position of the magnet (70, Figs. 1 and 3; 138, Fig. 4) at any given instant, is related to the difference between said pressures, and a Hall-effect device (14) responsive to the position of the magnet (70, Figs. 1 and 3; 138, Fig. 4) to produce an output signal corresponding to said pressure difference.

2. An assembly according to claim 1 characterised in that the magnet (70, Fig. 1) is carried by a bellows (80) surrounding the magnet which separates the first and second inlets (36, 64).

3. An assembly according to claim 1 or claim 2 characterised in that the magnet (70, Fig. 1; 138, Fig. 4) is of solid cylindrical shape mounted for sliding axial movement, one variable pressure being applied to a first end of said cylindrical magnet and the other variable pressure being applied to the other end of said cylindrical magnet, to slide the magnet to said position.

4. An assembly according to claim 3 characterised in that the said cylindrical magnet (78, Fig. 1) is mounted in a cylindrical body for said sliding movement, the body being open at one end (64) to form said second inlet, the body being formed with a bore (36) which provides said first inlet.

5. An assembly according to claim 4 characterised in that the cylindrical body is closed at a position (78, Fig. 1) spaced from an end opposite said open end to form a recess (18) separated from the magnet (70, fig. 1) and accommodating the said Hall-effect device (14), the magnet (70) being so located that it is closely adjacent said Hall-effect device (14).

6. An assembly according to claim 4 or claim 5, characterized in that the body includes a hollow cylindrical body (40) forming said second inlet (64) and having a thin-walled portion (68) which slidably accommodates one end of the magnet (70), the magnet (70) being further slidably mounted in a hollow bush (70) secured within the cylindrical body and having the other end thereof received with a bore (76) connected to said first inlet (36).

7. An assembly according to any one of claims 3 to 6 characterised in that the cylindrical body has an external screw thread (32), a seal (26) adjacent one end and a seal (28) adjacent said screw thread, the body being sealingly mounted in a complementary receiving recess of the unit (11).

8. An assembly according to claim 1 characterised in that the magnet (70, Fig. 3) is carried by a piston (100) reciprocable in a generally cylindrical hollow body member (102) having a recess (18) accommodating the Hall-effect device (14), the first inlet (112) communicating with one side of the piston (100) and the second inlet (110) communicating with the other side of the piston (100) to position the magnet (70), and a spring (104) biasing the piston and magnet towards the Hall-effect device (14).

9. An assembly according to any one of the preceding claims characterised in that the said Hall-effect device (14) is connected to a display (12, Fig. 5) which receives said output signal and indicates the value of the pressure difference.

**FIG.1.**

LOAD/DEFLECTION GRAPH

AVERAGE $\Delta P$ 9.0 Kg/cm$^2$ FOR 3.50mm MOVEMENT

RANGE OF STIFFNESS OF 11 SAMPLE BELLOWS

$\Delta P$ Kg/cm$^2$

RED

Ⓒ

WHITE

MOVEMENT LIMIT

RED

Ⓑ

WHITE

RED

WHITE

Ⓐ

DISTANCE OF MAGNET FROM SENSOR (mm)

**FIG.2.**

DIFFERENTIAL PRESSURE
RANGES—SWITCH POINTS

Ⓐ LOW SETTING

Ⓑ MEDIUM SETTING

Ⓒ HIGH SETTING

PERFORMANCE

$\Delta P$ WORKING RANGE 0-90Kg/cm$^2$

$\Delta P$ MAXIMUM    —70Kg/cm$^2$

MAXIMUM SYSTEM PRESSURE —200KG

0300833

FIG. 3.

FIG. 4.

FIG. 5.

## DOCUMENTS CONSIDERED TO BE RELEVANT

EP 88306818.1

| Category | Citation of document with indication, where appropriate, of relevant passages | Relevant to claim | CLASSIFICATION OF THE APPLICATION (Int. Cl.4) |
|---|---|---|---|
| Y | AT - B - 342 892 (PALL)<br><br>* Fig. 1; page 5, line 21 -- page 6, line 43 *<br>-- | 1,3-5, 8 | G 01 L 9/14<br>G 01 L 13/06 |
| Y | DE - A1 - 3 227 516 (BOSCH)<br><br>* Fig. 1,3; abstract *<br>-- | 1,3-5, 8 | |
| A | GB - A - 2 063 486 (BOSCH)<br><br>* Abstract; fig. 1 *<br>-- | 2 | |
| A | US - A - 4 203 384 (SILVERWATER)<br><br>* Fig. 2; column 6, lines 54-59 *<br>-- | 3 | |
| A | GB - A - 2 099 150 (UNIMA)<br><br>* Fig. 1; page 1, lines 74-95 *<br>-- | 7 | **TECHNICAL FIELDS SEARCHED (Int. Cl.4)**<br>G 01 L 7/00<br>G 01 L 9/00<br>G 01 L 13/00 |
| A | GB - A - 2 159 282 (NATIONAL NUCLEAR)<br><br>* Fig. 3; page 2, lines 60-75 *<br>---- | 9 | |

The present search report has been drawn up for all claims

| Place of search | Date of completion of the search | Examiner |
|---|---|---|
| VIENNA | 04-11-1988 | BURGHARDT |